# EUROPEAN PATENT SPECIFICATION

(11) **EP 3 907 870 B1**
(45) Date of publication and mention of the grant of the patent: **12.07.2023**
(21) Application number: 20172718.7
(22) Date of filing: 04.05.2020
(51) Int. Cl.: H02M 1/36, H02M 3/337, H02M 1/32, H02M 1/00

(54) **POWER CONVERTER WITH OVERSHOOT PROTECTION**
LEISTUNGSWANDLER MIT ÜBERSCHWINGSCHUTZ
CONVERTISSEUR DE PUISSANCE AVEC PROTECTION DE DÉPASSEMENT

(43) Date of publication of application: 10.11.2021
(73) Proprietor: Tridonic GmbH & Co. KG, 6851 Dornbirn (AT)
(72) Inventor: Maldoner, Jakob, 6850 Dornbirn (AT); Marte, Patrick, 6850 Dornbirn (AT); Walch, Patrick, 6850 Dornbirn (AT)
(74) Representative: Rupp, Christian

(56) References cited:
- CN-A- 110 932 552
- JP-A- 2005 143 255
- US-A1- 2005 122 088

## Description

The invention relates to resonant converters for supplying at its output terminals, for example a LED load.

Resonant converters are preferably operated with a frequency different from its resonant frequency. A load change is performed by modulating high frequency pulses of the resonant converter with a low frequency pulse width modulation PWM signal. By adjusting the duty cycle of the PWM signal, a dimming of the power transmitted by the converter, and thus the resulting current through the load can be achieved.

When the converter is operated with a frequency different from the resonant frequency, typically higher than the resonance frequency, a switching off of the high frequency pulses of the resonant converter does not necessary lead to an immediate switching off of the power transmission between the primary converter side and the secondary converter side of the converter. Rather, it can lead to an ongoing power transmission with a relatively high peak and a resulting ripple in the output current supplied to the load. This leads to a sub-optimal switching behavior with regard to output current control.

For example the document EP 3 597 010 A1 shows a conventional power converter.

JP 2005 143 255 A discloses a resonance power supply apparatus. When the drive of the resonance power supply apparatus is stopped, the switching means are driven in anti-phase in such a way that the amplitude of the resonance current becomes zero. T

CN 110932552 A discloses a delay protection method for an LLC resonant power supply.

Accordingly, the object of the invention is to provide a power converter, which allows for a very accurate output current control.

The object is solved by the features of the independent claims. Additional features of the invention are provided in the dependent claims. In the following, parts of the description and drawings referring to embodiments which are not covered by the claims are not presented as embodiments of the invention, but as examples useful for understanding the invention.

According to a first aspect of the invention, a resonant converter for supplying a load, for example a LED load, is provided. The resonant converter comprises a primary converter side, comprising a converter switching circuit, a secondary converter side, and a controller. The controller is configured to operate the converter switching circuit using pulse width modulation, for regulating a power transfer from the primary converter side to the secondary converter side. The resonant converter comprises an overshoot protection circuit connected to the primary converter side and to the controller.

The overshoot protection circuit comprises a zero crossing detection circuit, configured to detect a zero crossing of a resonant current on the primary converter side. The controller is configured to, at a switch-off event, switch off of the converter switching circuit at a detected zero crossing of the resonant current on the primary converter side, after the switch-off event. This allows for a significant reduction of the current overshoot.

Advantageously, the primary converter side comprises a resonant inductor. The zero crossing detection circuit then comprises a current measuring circuit and a current measuring coil coupled to the resonant inductor. The current measuring circuit is configured to determine the resonant current on the primary converter side by measuring a current through the current measuring coil. The zero crossing detection circuit is configured to determine a zero crossing of the resonant current on the primary converter side at a zero crossing of the current through the current measuring coil. This allows for a very simple determining of the zero crossing.

Advantageously, the current measuring circuit comprises a series connection of a first resistor and a second resistor, connected between the current measuring coil and a negative supply voltage terminal.

A connection point between the first resistor and the second resistor is then connected to the controller. This allows for a very simple construction of the current measuring circuit.

Further advantageously, the overshoot protection circuit comprises a switching frequency doubling circuit, configured to, at a switch-off event, double an operating frequency of the converter switching circuit. The controller is then configured to switch off the converter switching circuit after at least one switching cycle after the switch-off event. This ensures that the converter switching circuit operates for an entire switching cycle at the doubled operating frequency, which significantly reduces the energy amount stored in the resonating elements, and thereby significantly reducing the current overshoot.

Advantageously, the switching frequency doubling circuit is integrated on a single integrated circuit together with the controller. This allows an especially simple implementation.

Preferably, the overshoot protection circuit additionally comprises a discharge circuit, which is configured to, at a switch-off event, discharge a primary converter side resonator while switching off the converter switching circuit. This ensures that energy still stored within the resonator on the primary converter side is discharged instead of transferred to the secondary converter side, where it would generate a current overshoot. This significantly reduced the current overshoot as well.

Preferably, the discharge circuit comprises a series connection of a discharge resistor, configured to limit a discharge current, a discharge diode configured to prevent a reverse current flow, and a discharge switch, configured to selectively activate and deactivate the discharge. This series connection is then connected in parallel to a resonating element on the primary converter side. This allows for a very simply construction, and for an efficient discharge of the resonator.

Further advantageously, the primary converter side comprises a resonator, preferably a series connection of a first capacitance, an inductance, and a second capacitance. This allows for a very accurate current control.

Advantageously, the converter switching circuit is configured to operate at a switching frequency of more than 500 KHz, preferably more than 1 MHz, most preferably more than 2 MHz. The switching frequency is higher than a pulse width modulation frequency. This allows for a high degree of miniaturization of the converter circuit.

Advantageously, the converter switching circuit comprises switching transistors. These switching transistors are GaN transistors. This allows for a very high switching frequency.

Advantageously, the load is a light emitting diode or a plurality of light emitting diodes. This allows for a very efficient operation.

According to a second aspect of the invention, a method for operating a resonant converter for supplying a load is provided. The method comprises operating a converter switching circuit of the resonant converter using pulse width modulation, for regulating a power transfer from a primary converter side of the resonant converter to a secondary converter side of the resonant converter. Thu.

The method comprises detecting a zero crossing of the resonant current on the primary converter side, and, at a switch-off event, switching off a converter switching circuit and a detected zero crossing of the resonant current on the primary converter side, after the switch-off event. This allows for a significant reduction of an overshoot current.

Further advantageously, the method comprises, at a switch-off event, doubling an operating frequency of converter switching circuit, and switching off the converter switching circuit only after at least one switching cycle after the switch off event. This allows for a further reduction in overshoot current.

An exemplary embodiment of the invention is no further explained with respect to the drawings, in which
- Fig. 4: shows a circuit diagram of an embodiment of an inventive converter;
- Fig. 5: shows a block diagram of a detail of an advantageous modification the inventive converter;
- Fig. 6: shows the presentative signals according to an advantageous modification of the inventive converter;

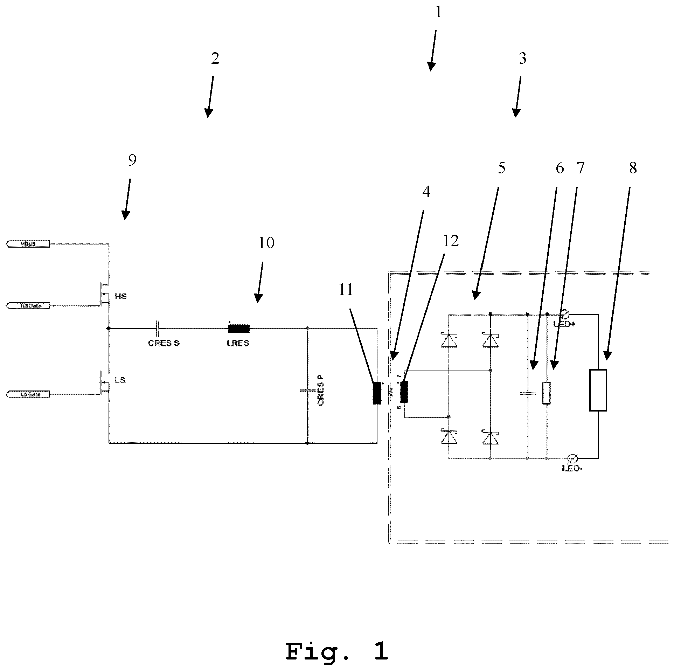

- Fig. 1: shows an exemplary converter;

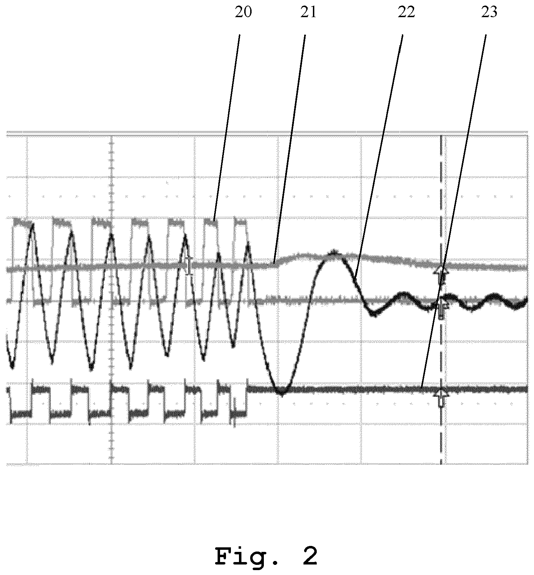

- Fig. 2: exemplary signals in an exemplary converter;

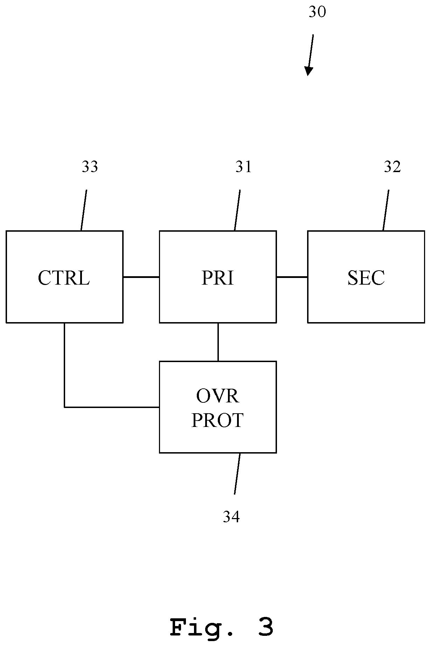

- Fig. 3: shows a block diagram of an example converter not falling within the scope of the claims;

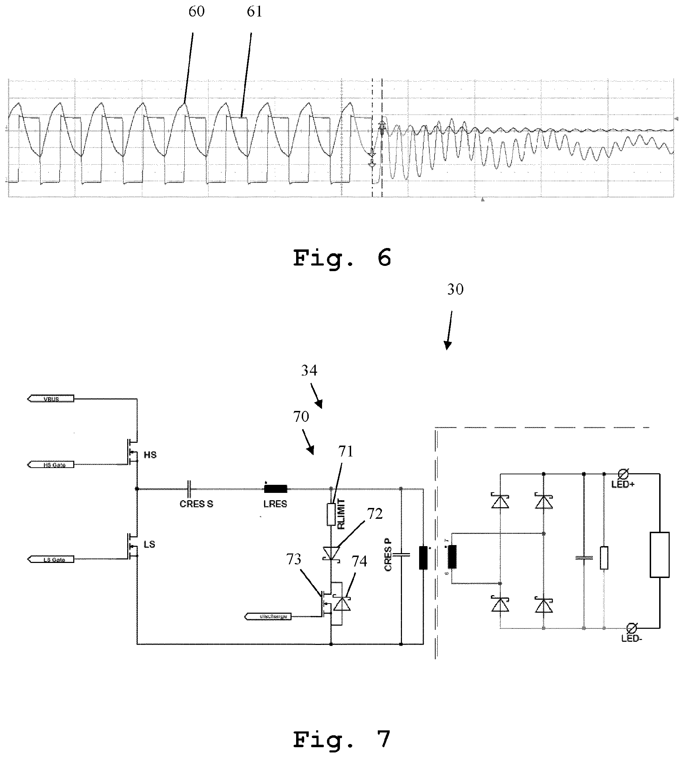

- Fig. 7: shows a further advantageous modification of the inventive converter in a circuit diagram, and

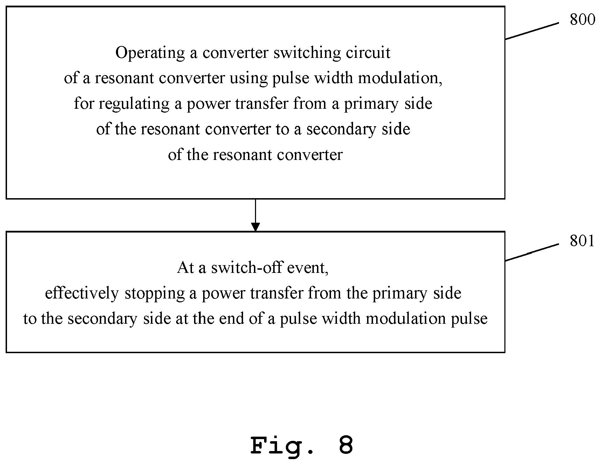

- Fig. 8: shows a flow diagram of an illustrative example not falling within the terms of the claims.

First, we demonstrate the function and problems of an exemplary converter along Fig. 1. With regard to Fig. 2 - Fig. 7, different embodiments and/or illustrative examples of the inventive converter are shown and described with regard to their function. Similar entities and reference numbers in different figures have been partially omitted.

In Fig. 1, an exemplary converter 1 is shown. The converter 1 comprises a primary converter side 2 and a secondary converter side 3. The primary converter side 2 comprises a converter switching circuit 9 comprised by two transistors HS, LS. The transistors HS, LS are connected in series. Moreover, the primary converter side 2 comprises a resonator 10, comprised by first compositor CRESS, an inductance LRES, and a second capacitance CRESP, connected in this order in a series connection.

Advantageously, the resonator 10 uses a LCC topology, as shown here. This results in the resonator acting as a current source, while an alternate LLC topology would result in the resonator acting as voltage source.

Furthermore, the primary converter side 2 comprises a primary converter side coupling inductor 11, which is coupled to a secondary converter side coupling inductor 12, which is part of the secondary converter side 3. The primary converter side coupling inductor 11 and the secondary converter side coupling inductor 12 together are also referred to as coupler 4. The coupler 4 provides a galvanic barrier, indicated by a double dashed line.

The converter switching circuit 9 is connected to bus voltage VBUS at a first terminal of the transistor HS. The resonator 10 is connected to the converter switching circuit 9 at a connection point between the transistors HS and LS. The second terminal of the transistor LS is connected to the second capacitor CRESP of the resonator. The primary converter side coupling inductor 11 is connected in parallel to the second capacitor CRESP.

On the secondary converter side 3, the secondary converter side coupling inductor 12 is connected to a rectifier 5, which for example is constructed from 4 diodes. The rectifier is connected in parallel to a capacitor 6 and a resistor 7. A load 8 can be connected in parallel to the rectifier 5 as well, but is not part of the converter 1.

The converter 1 moreover comprises a controller, which is not displayed here. The controller is connected to the control terminals of the transistors HS, LS and therefore to the converter switching circuit 9. The controller controls the switching off the converter switching circuit 9, and especially the switching of the transistors HS, LS.

Especially, the controller is adapted to control the switching circuit 9 to operate at an operating frequency, which is above the resonant frequency of the resonator 10.

The transistors HS, LS are switched on and off repeatedly in an alternating manner at this operating frequency. In order to regulate a power output, the controller moreover modulates the high frequency switching and the operating frequency with a pulse width modulation signal, which has a significantly lower frequency.

By the operation of the converter switching circuit 9, the resonator 10 is supplied with energy, which is transferred to the secondary converter side by the primary converter side coupling inductor 11 and the secondary converter side coupling inductor 12.

The energy transferred to the secondary converter side 3 is available there as an alternating current, which is rectified by the rectifier 5, and smoothed by the capacitor 6 and the resistor 7. This smoothed rectified current is provided to the load 8.

Advantageously, the DC input signal on the bus is around 400 Volt. The DC input signal may be provided from an AC-DC-converter, e.g. a power factor correction circuit.

This allows for a wide output voltage window when using the here-employed LCC topology. For a converter to be used with LED loads, a wide output current window though is advantageous. This can be facilitated by preventing an overshoot of the output current. Such an overshoot prevention is the basis of the present invention and further described along Fig. 2 - Fig. 8.

In Fig. 2 representative signals in an exemplary converter, as shown in Fig. 1, are shown. Here, a voltage of the converter switching circuit 9 is shown with reference number 20. Moreover, a current through the load 8 is shown with reference number 21. A resonant current, which corresponds to a current in the resonator 10 is shown with reference number 22. Finally, a voltage at the transistor LS control terminal is shown with reference number 23.

It can clearly be seen that in the moment of the switch-off event that can best be seen on curve 23, the resonant current does not stop, but initially increases before reducing in form of a ripple. This actually increases the current through the load shown as curve 21, initially. A switch-off event therein is defined as a manually or automatically transmitted signal indicating that the power to the load should be switched off.

In Fig. 3 an exemplary converter 30 not falling within the scope of the claims is shown. The converter comprises a primary converter side 31 connected to a secondary converter side 32. Moreover, the converter 30 comprises a controller 33, which is connected to the primary converter side 31. In addition, the converter 30 comprises an overshoot protection circuit 34, which is connected to the primary converter side 31 and to the controller 33.

The controller 33 controls the switching of the primary converter side 31 and thereby the amount of energy transferred to the secondary converter side 32 from the primary converter side 31. The overshoot protection circuit 34 effectively stops power transfer from the primary converter side to the secondary converter side at the end of a pulse width modulation pulse initiated by the controller 33.

According to the present invention, different options, which can be used in conjunction for reducing the overshoot are provided.

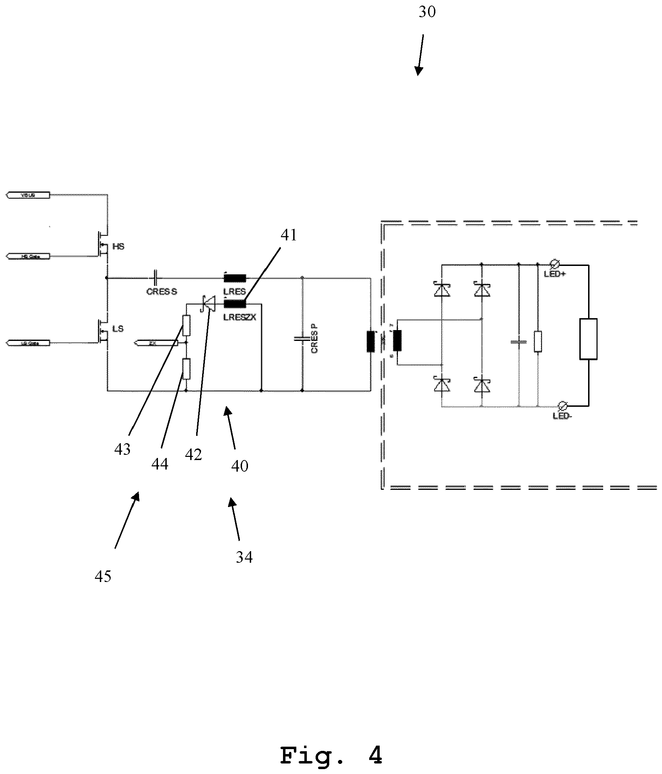

In Fig. 4 an option of overshoot current protection according to the claimed invention is provided in form of an embodiment of the inventive converter. The circuit is identical to the circuit shown in Fig. 1 in large degrees. The description of the individual elements as well as their connection are omitted, as long as they are identical to the exemplary converter of Fig. 1.

Here, additionally, an overshoot protection circuit 34 is provided. The overshoot protection circuit 34 comprises a zero crossing detection circuit 40. The zero crossing detection circuit 40 comprises a current measuring coil 41, which is coupled to the first resonant inductor LRES, and a current measuring circuit 45, connected to the current measuring coil 41. The current measuring circuit 45 comprises, connected in series to the current measuring coil, a diode 42, a first resistance 43, and a second resistance 44. Both, the current measuring coil 41 as well as the second resistance 44 are connected at their second terminals to low supply voltage.

A connection point between the first resistor 43 and the second resistor 44 is connected to the controller 33.

In operation, the current through the resonant inductor LRES is mirrored as a current through the current measuring coil 41. This current is rectified by the diode 42 and results in a voltage between the resistors 43 and 44, which is supplied to the controller 33. The voltage supplied to the controller 33 correspond to the current through the current measuring coil. Therefore zero crossings of the current through the current measuring coil, as well as zero crossings of the current through the resonant inductor are provided to the controller 33. The controller 33 is then set up for switching off the converter switching circuit 9 only at the moment of a detected zero crossing after a switch-off event has occurred.

Therefore, when a switch-off event occurs, the controller waits with actually switching off the converter switching circuit 9 until the next zero crossing is detected, and then switches the converter switching circuit 9 off. This significantly reduced current overshoot.

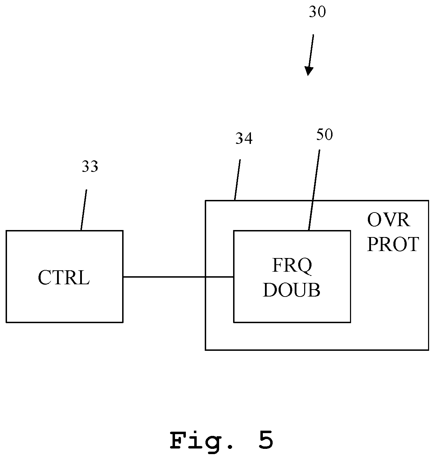

A further method of reducing current overshoot is to increase the operating frequency, and thereby move the operating point of the resonator 10 further away from its resonance frequency, thereby reducing the amount of energy stored in the resonator 10, before switching off the converter switching circuit 9. This is for example done by a converter shown in Fig. 5.

The overshoot protection circuit 34 comprises a switching frequency doubling circuit 50. At a switch-off event, the operating frequency doubling circuit doubles the operating frequency at which the controller controls the operation of the converter switching circuit 9. The effect of this measure is shown and described along in Fig. 6. It is important to note that this measure is especially effective at low operating power of the load, but is applicable at any operating power.

It is important to note that the switching frequency doubling circuit 50 can be implemented together with the controller 33 as part of a single integrated circuit.

In Fig. 6, the effect of using a switching frequency doubling circuit, as shown in Fig. 5, is shown. Here, reference number 60 shows the current in the resonator 10, while reference number 61 shows the voltage and the connection point between the transistors HS, LS of the converter switching circuit 9. It can readily be seen here, that for the last switching period before switching off the converter switching circuit 9, it is operated at a double frequency. This results in a significant reduction in the current overshoot.

A further option of reducing current overshoot is to actively discharge the resonator 10 when a switch-off event occurs. This is shown in Fig. 7. Also here, the majority of the circuit is identical to the circuit shown in Fig. 1 with regard to construction and function. Also here, only elements differing from the elements of Fig. 1 are shown.

Here, in addition to the circuit of Fig. 1, an overshoot protection circuit 34 is used. The overshoot protection circuit 34 here comprises a discharge circuit 70, which is connected in parallel to the second capacitor CRESP of the resonator 10. The discharge circuit 70 comprises a discharge resistor 71, connected to a discharge diode 72, which in turn is connected to a discharge switch 73. The discharge switch 73 comprises a body diode 74 which allows a certain discharge current while the discharge switch 73 is switched off. This discharge current is prevented by the discharge diode 72, which is arranged in opposite polarization. The discharge resistor 71 limits the amount of the discharge current.

The discharge switch 73 is activated, at occurrence of a switch-off event. By activating the discharge switch, a discharge current, limited by the discharge resistor 72 flows through the discharge circuit, and thereby discharges energy still stored in the resonator 10. This significantly reduces the amount of current overshoot.

The inventive converter is especially suitable for operating at high operating frequencies of the converter switching circuit 9. Especially, the transistors LS, HS can be switched with frequencies above 500 KHz, preferably above 1 MHz, most preferably above 2 MHz. This can especially be achieved when using GaN transistors.

It is important to note that three options for prevention overshoot current shown before, can be employed in advantageous combination.

Finally, in Fig. 8 an example of a method not falling with the scope of the claims is shown in a flow diagram. In a first step 800, a converter switching circuit of a resonant converter is operated using pulse width modulation, for regulating a power transfer from a primary converter side to a secondary converter side. In a second step 801, at a switch-off event, a power transfer from the primary converter side to the secondary converter side is effectively stopped at the end of a pulse width modulation pulse.

It is pointed out that all features described along with the device embodiments shown in Fig. 2 - Fig. 7 are also to be understood as disclosed in conjunction with the method shown in Fig. 8.

The present invention is not limited to the embodiments and especially not to specific types of resonators or transistors. The present invention can be employed in a great deal of different converter types.

## Claims

1. Resonant converter (30) for supplying a load (8), for example a LED load, comprising:
- a primary converter side (2), comprising a converter switching circuit (9),
- a secondary converter side (3), and
- a controller (33), configured to operate the converter switching circuit (9) using pulse width modulation, for regulating a power transfer from the primary converter side (2) to the secondary converter side (3), and
- an overshoot protection circuit (34) connected to the primary converter side (2) and to the controller (33),
**characterized in that**
the overshoot protection circuit (34) comprises a zero crossing detection circuit (40), configured to detect a zero crossing of a resonant current on the primary converter side (2), and
wherein the controller (33) is configured to, at a switch-off event, switch off the converter switching circuit (9) at a detected zero crossing of the resonant current on the primary converter side (2), after the switch-off event.

2. Resonant converter (30) according to claim 1,
wherein the primary converter side (2) comprises a resonant inductor (LRES),
the zero crossing detection circuit (40) comprises a current measuring circuit (45) and a current measuring coil (41) coupled to the resonant inductor (LRES),
the current measuring circuit (45) is configured to determine the resonant current on the primary converter side (2) by measuring a current through the current measuring coil (41), and
the zero crossing detection circuit (40) is configured to determine a zero crossing of the resonant current on the primary converter side (2) at a zero crossing of the current through the current measuring coil (41).

3. Resonant converter (30) according to claim 2,
wherein the current measuring circuit (45) comprises a series connection of a first resistor (43) and a second resistor (44), connected between the current measuring coil (41) and a negative supply voltage terminal, and
wherein a connection point between the first resistor (43) and the second resistor (44) is connected to the controller (33).

4. Resonant converter (30) according to any of the claims 1 to 3,
wherein the overshoot protection circuit (34) comprises a switching frequency doubling circuit (50), configured to, at a switch-off event, double an operating frequency of the converter switching circuit (9), and
the controller (33) is configured to switch off the converter switching circuit (9) after at least one switching cycle after the switch-off event.

5. Resonant converter (30) according to claim 4,
wherein the switching frequency doubling (50) circuit is integrated on a single integrated circuit together with the controller (33).

6. Resonant converter (30) according to any of the claims 1 to 5,
wherein the overshoot protection circuit (34) comprises a discharge circuit (70), configured to, at a switch-off event, discharge a primary converter side resonator (10) while switching off the converter switching circuit (9).

7. Resonant converter (30) according to claim 6,
wherein the discharge circuit (70) comprises a series connection of
- a discharge resistor (71), configured to limit a discharge current,
- a discharge diode (72), configured to prevent reverse current flow, and
- a discharge switch (73), configured to selectively activate and deactivate the discharge,
connected in parallel to a resonating element (CRESP) on the primary converter side (2).

8. Resonant converter (30) according to any of the claims 1 to 7,
wherein the primary converter side (2) comprises a resonator (10), preferably a series connection of a first capacitor (CRESS), an inductor (LRES), and a second capacitance (CRESP).

9. Resonant converter (30) according to any of the claims 1 to 8,
wherein the converter switching circuit (9) is configured to operate at a switching frequency of more than 500kHz, preferably more than 1MHz, most preferably more than 2MHz, and
the switching frequency is higher than a pulse width modulation frequency.

10. Resonant converter (30) according to any of the claims 1 to 9,
wherein the converter switching circuit (9) comprises switching transistors (HS, LS), and
wherein the switching transistors (HS, LS) are GaN transistors.

11. Resonant converter (30) according to any of the claims 1 to 10, further comprising the load (8), wherein the load (8) is a light emitting diode or a plurality of light emitting diodes.

12. Method for operating a resonant converter for supplying a load, comprising the following steps:
- operating a converter switching circuit of the resonant converter using pulse width modulation, for regulating a power transfer from a primary converter side of the resonant converter to a secondary converter side of the resonant converter (800),
**characterized by**
- detecting a zero crossing of a resonant current on the primary converter side, and
- at a switch-off event, switching off the converter switching circuit at a detected zero crossing of the resonant current on the primary converter side, after the switch-off event.

13. Method according to claim 12,
wherein the method further comprises
- at a switch-off event, doubling an operating frequency of a converter switching circuit, and
- switching off the converter switching circuit only after at least one switching cycle after the switch-off event.

14. Method according to claim 12 or claim 13,
wherein the method comprises
- at a switch-off event, discharging a primary converter side resonator (10) while switching off the converter switching circuit (9).

## Patentansprüche

1. Resonanzwandler (30) zum Versorgen einer Last (8), zum Beispiel eine LED-Last, umfassend:
- eine primäre Wandlerseite (2), umfassend einen Wandlerschaltkreis (9),
- eine sekundäre Wandlerseite (3) und
- eine Steuerung (33), die konfiguriert ist, um den Wandlerschaltkreis (9) unter Verwendung von Pulsbreitenmodulation zu betreiben, zum Regeln einer Leistungsübertragung von der primären Wandlerseite (2) an die sekundäre Wandlerseite (3), und
- einen Überschwingschutzkreis (34) der mit der primären Wandlerseite (2) und mit der Steuerung (33) geschaltet ist,
**dadurch gekennzeichnet, dass**
der Überschwingschutzkreis (34) einen Nulldurchgangserfassungskreis (40) umfasst, der konfiguriert ist, um einen Nulldurchgang eines Resonanzstroms auf der primären Wandlerseite (2) zu erfassen, und
wobei die Steuerung (33) konfiguriert ist, um an einem Abschaltereignis den Wandlerschaltkreis (9) bei einem erfassten Nulldurchgang des Resonanzstroms auf der primären Wandlerseite (2) nach dem Abschaltereignis abzuschalten.

2. Resonanzwandler (30) nach Anspruch 1, wobei die primäre Wandlerseite (2) einen Resonanzinduktor (LRES) umfasst,
der Nulldurchgangserfassungskreis (40) einen Strommesskreis (45) und eine Strommessspule (41), die mit dem Resonanzinduktor (LRES) gekoppelt ist, umfasst, der Strommesskreis (45) konfiguriert ist, um den Resonanzstrom auf der primären Wandlerseite (2) durch Messen eines Stroms durch die Strommessspule (41) zu bestimmen, und
der Nulldurchgangserfassungskreis (40) konfiguriert ist, um einen Nulldurchgang des Resonanzstroms auf der primären Wandlerseite (2) bei einem Nulldurchgang des Stroms durch die Strommessspule (41) zu bestimmen.

3. Resonanzwandler (30) nach Anspruch 2, wobei der Strommesskreis (45) eine Reihenschaltung eines ersten Widerstands (43) und eines zweiten Widerstands (44) umfasst, der zwischen der Strommessspule (41) und einem negativen Versorgungsspannungsanschluss geschaltet ist, und wobei ein Anschlusspunkt zwischen dem ersten Widerstand (43) und dem zweiten Widerstand (44) mit der Steuerung (33) angeschlossen ist.

4. Resonanzwandler (30) nach einem der Ansprüche 1 bis 3, wobei der Überschwingschutzkreis (34) einen Schaltfrequenzverdopplungskreis (50) umfasst, der konfiguriert ist, um an einem Abschaltereignis eine Betriebsfrequenz des Wandlerschaltkreises (9) zu verdoppeln, und die Steuerung (33) konfiguriert ist, um den Wandlerschaltkreis (9) nach mindestens einem Schaltzyklus nach dem Abschaltereignis abzuschalten.

5. Resonanzwandler (30) nach Anspruch 4,
wobei der Schaltfrequenzverdopplung(50)-Kreis zusammen mit der Steuerung (33) auf einer einzigen integrierten Schaltung integriert ist.

6. Resonanzwandler (30) nach einem der Ansprüche 1 bis 5,
wobei der Überschwingschutzkreis (34) einen Entladekreis (70) umfasst, der konfiguriert ist, um an einem Abschaltereignis einen Resonator der primären Wandlerseite (10) beim Abschalten des Wandlerschaltkreises (9) zu entladen.

7. Resonanzwandler (30) nach Anspruch 6, wobei der Entladekreis (70) eine Reihenschaltung umfasst von
- einem Entladewiderstand (71), der konfiguriert ist, um einen Entladestrom zu begrenzen,
- einer Entladediode (72), die konfiguriert ist, um einen Umkehrstromfluss zu verhindern, und
- einem Entladeschalter (73), der konfiguriert ist, um die Entladung selektiv zu aktivieren und zu deaktivieren, die parallel zu einem Resonanzelement (CRESP) auf der primären Wandlerseite (2) geschaltet ist.

8. Resonanzwandler (30) nach einem der Ansprüche 1 bis 7,
wobei die primäre Wandlerseite (2) einen Resonator (10), vorzugsweise eine Reihenschaltung eines ersten Kondensators (CRESS), eines Induktors (LRES) und einer zweiten Kapazität (CRESP) umfasst.

9. Resonanzwandler (30) nach einem der Ansprüche 1 bis 8,
wobei der Wandlerschaltkreis (9) konfiguriert ist, um bei einer Schaltfrequenz von mehr als 500 kHz, vorzugsweise mehr als 1 MHz, am meisten bevorzugt mehr als 2 MHz in Betrieb zu sein, und
die Schaltfrequenz höher als eine Pulsbreitenmodulationsfrequenz ist.

10. Resonanzwandler (30) nach einem der Ansprüche 1 bis 9,
wobei der Wandlerschaltkreis (9) Schalttransistoren (HS, LS) umfasst, und
wobei die Schalttransistoren (HS, LS) GaN-Transistoren sind.

11. Resonanzwandler (30) nach einem der Ansprüche1 bis 10, ferner umfassend die Last (8),
wobei die Last (8) eine Leuchtdiode oder eine Vielzahl von Leuchtdioden ist.

12. Verfahren zum Betreiben eines Resonanzwandlers zum Versorgen einer Last, umfassend die folgenden Schritte:
- Betreiben eines Wandlerschaltkreises des Resonanzwandlers unter Verwendung von Pulsbreitenmodulation zum Regeln einer Leistungsübertragung von einer primären Wandlerseite des Resonanzwandlers zu einer sekundären Wandlerseite des Resonanzwandlers (800),
**gekennzeichnet durch**
- Erfassen eines Nulldurchgangs eines Resonanzstroms auf der primären Wandlerseite, und
- an einem Abschaltereignis, Abschalten des Wandlerschaltkreises bei einem erfassten Nulldurchgang des Resonanzstroms auf der primären Wandlerseite, nach dem Abschaltereignis.

13. Verfahren nach Anspruch 12, wobei das Verfahren ferner umfasst
- an einem Abschaltereignis, das Verdoppeln einer Betriebsfrequenz eines Wandlerschaltkreises, und
- Abschalten des Wandlerschaltkreises erst nach mindestens einem Schaltzyklus nach dem Abschaltereignis.

14. Verfahren nach Anspruch 12 oder 13, wobei das Verfahren umfasst
- an einem Abschaltereignis, das Entladen eines Resonators einer primären Wandlerseite (10) beim Ausschalten des Wandlerschaltkreises (9).

## Revendications

1. Convertisseur résonnant (30) pour alimenter une charge (8), par exemple une charge de DEL, comprenant :
- un côté convertisseur primaire (2), comprenant un circuit de commutation de convertisseur (9),
- un côté convertisseur secondaire (3), et
- un contrôleur (33), configuré pour faire fonctionner le circuit de commutation de convertisseur (9) en utilisant une modulation de largeur d'impulsion, pour réguler un transfert de puissance du côté convertisseur primaire (2) au côté convertisseur secondaire (3), et
- un circuit de protection contre les dépassements (34) connecté au côté convertisseur primaire (2) et au contrôleur (33),
**caractérisé en ce que**
le circuit de protection contre les dépassements (34) comprend un circuit de détection de passage par zéro (40), configuré pour détecter un passage par zéro d'un courant résonnant du côté convertisseur primaire (2), et
dans lequel le contrôleur (33) est configuré pour, lors d'un événement de mise hors circuit, mettre hors circuit le circuit de commutation de convertisseur (9) lors d'un passage par zéro détecté du courant résonnant du côté convertisseur primaire (2), après l'événement de mise hors circuit.

2. Convertisseur résonnant (30) selon la revendication 1, dans lequel le côté convertisseur primaire (2) comprend une inductance résonnante (LRES),
le circuit de détection de passage par zéro (40) comprend un circuit de mesure de courant (45) et une bobine de mesure de courant (41) couplée à l'inductance résonnante (LRES), le circuit de mesure de courant (45) est configuré pour déterminer le courant résonnant du côté convertisseur primaire (2) en mesurant un courant à travers la bobine de mesure de courant (41), et
le circuit de détection de passage par zéro (40) est configuré pour déterminer un passage par zéro du courant résonnant du côté convertisseur primaire (2) lors d'un passage par zéro du courant à travers la bobine de mesure de courant (41).

3. Convertisseur résonnant (30) selon la revendication 2, dans lequel le circuit de mesure de courant (45) comprend une connexion en série d'une première résistance (43) et d'une deuxième résistance (44), connectées entre la bobine de mesure de courant (41) et une borne de tension d'alimentation négative, et dans lequel un point de connexion entre la première résistance (43) et la seconde résistance (44) est connecté au contrôleur (33).

4. Convertisseur résonnant (30) selon l'une quelconque des revendications 1 à 3, dans lequel le circuit de protection contre les dépassements (34) comprend un circuit de doublage de fréquence de commutation (50), configuré pour, lors d'un événement de mise hors circuit, doubler une fréquence de fonctionnement du circuit de commutation de convertisseur (9), et le contrôleur (33) est configuré pour bloquer le circuit de commutation de convertisseur (9) après au moins un cycle de commutation après l'événement de mise hors circuit.

5. Convertisseur résonnant (30) selon la revendication 4,
dans lequel le circuit de doublage de fréquence de commutation (50) est intégré sur un seul circuit intégré avec le contrôleur (33).

6. Convertisseur résonnant (30) selon l'une quelconque des revendications 1 à 5,
dans lequel le circuit de protection contre les dépassements (34) comprend un circuit de décharge (70), configuré pour, lors d'un événement de mise hors circuit, décharger un résonateur côté convertisseur primaire (10) tout en mettant hors circuit le circuit de commutation de convertisseur (9).

7. Convertisseur résonnant (30) selon la revendication 6, dans lequel le circuit de décharge (70) comprend une connexion en série de
- une résistance de décharge (71), configurée pour limiter un courant de décharge,
- une diode de décharge (72), configurée pour empêcher la circulation de courant inverse, et
- un interrupteur de décharge (73), configuré pour activer et désactiver sélectivement la décharge, connecté en parallèle à un élément résonnant (CRESP) du côté convertisseur primaire (2).

8. Convertisseur résonnant (30) selon l'une quelconque des revendications 1 à 7,
dans lequel le côté convertisseur primaire (2) comprend un résonateur (10), de préférence une connexion en série d'un premier condensateur (CRESS), d'une inductance (LRES) et d'une seconde capacité (CRESP).

9. Convertisseur résonnant (30) selon l'une quelconque des revendications 1 à 8,
dans lequel le circuit de commutation de convertisseur (9) est configuré pour fonctionner à une fréquence de commutation supérieure à 500 kHz, de préférence supérieure à 1 MHz, de manière préférée entre toutes supérieure à 2 MHz, et
la fréquence de commutation est supérieure à une fréquence de modulation de largeur d'impulsion.

10. Convertisseur résonnant (30) selon l'une quelconque des revendications 1 à 9,
dans lequel le circuit de commutation de convertisseur (9) comprend des transistors de commutation (HS, LS), et
dans lequel les transistors de commutation (HS, LS) sont des transistors GaN.

11. Convertisseur résonnant (30) selon l'une quelconque des revendications 1 à 10, comprenant en outre la charge (8),
dans lequel la charge (8) est une diode électroluminescente ou une pluralité de diodes électroluminescentes.

12. Procédé de fonctionnement d'un convertisseur résonnant pour alimenter une charge, comprenant les étapes suivantes :
- faire fonctionner un circuit de commutation de convertisseur du convertisseur résonnant en utilisant une modulation de largeur d'impulsion, pour réguler un transfert de puissance d'un côté convertisseur primaire du convertisseur résonnant à un côté convertisseur secondaire du convertisseur résonnant (800),
**caractérisé par**
- la détection d'un passage par zéro d'un courant résonnant du côté convertisseur primaire, et
- lors d'un événement de mise hors circuit, la mise hors circuit du circuit de commutation de convertisseur lors d'un passage par zéro détecté du courant résonnant du côté convertisseur primaire, après l'événement de mise hors circuit.

13. Procédé selon la revendication 12, dans lequel le procédé comprend en outre
- lors d'un événement de mise hors circuit, le doublage d'une fréquence de fonctionnement d'un circuit de commutation de convertisseur, et
- la mise hors circuit du circuit de commutation de convertisseur uniquement après au moins un cycle de commutation après l'événement de mise hors circuit.

14. Procédé selon la revendication 12 ou la revendication 13, dans lequel le procédé comprend
- lors d'un événement de mise hors circuit, la décharge d'un résonnateur côté convertisseur primaire (10) tout en mettant hors circuit le circuit de commutation de convertisseur (9).
